# EUROPEAN PATENT SPECIFICATION

(11) **EP 3 283 441 B1**
(45) Date of publication and mention of the grant of the patent: **02.03.2022**
(21) Application number: 16735725.0
(22) Date of filing: 15.04.2016
(51) Int. Cl.: C02F 1/24

(54) **METHOD AND SYSTEM FOR ANAEROBIC TREATMENT OF ORGANICALLY LOADED WASTEWATER**
VERFAHREN UND SYSTEM ZUR ANAEROBER BEHANDLUNG VON ORGANISCH BELASTETEM ABWASSER
PROCÉDÉ ET SYSTÈME DE TRAITEMENT ANAÉROBIE D'EAUX USÉES CHARGÉES ORGANIQUEMENT

(30) Priority: 17.04.2015 WO PCT/NL2015/050261
(43) Date of publication of application: 21.02.2018
(73) Proprietor: Nijhuis Water Technology B.V., 7007 CD Doetinchem (NL)
(72) Inventor: KLUIT, Arie, 7007 CD Doetinchem (NL); MENKVELD, Hendrik Willem Herman, 7007 CD Doetinchem (NL); HOLTERMAN, Menno-Martijn, 7007 CD Doetinchem (NL); RUITENBERG, Antonie, 7007 CD Doetinchem (NL)
(74) Representative: Nederlandsch Octrooibureau
(86) International application number: PCT/NL2016/050269
(87) International publication number: WO 2016/167663

(56) References cited:
- WO-A1-2013/155631
- US-A- 5 015 384

## Description

### Field of the invention

The present invention relates to a method for anaerobic treatment of an organic wastewater and organic waste streams. In a further aspect the invention relates to a system for anaerobic treatment of such an organic wastewater and organic waste streams.

### Prior art

Food and beverage production plants are major wastewater contributors and often have food waste. Particularly plants with wastewaters with a significant total suspended solids (TSS) and/or fats, oils and greases (FOG) like in the dairy, meat and chicken industry need to pre-treat their wastewater before high rate anaerobic reactors can be applied. This pre-treatment generally includes undesirable chemical treatment and generates a concentrated side stream which needs to be dealt with.

In parts of the food and beverage industry many high-rate reactors are installed, typically on wastewaters with high dissolved organic matter and low total suspended solids (TSS) and Fats, Oils and Greases (FOG). These high rate reactors, such as UASB (Upflow Anaerobic Sludge Bed) and EGSB (Enhanced Granular Sludge Bed) reactors depend on the granulation of the consortia of biomass in the reactor. In many occasions there are problems with maintaining the granular sludge, due to the presence of solids, oils and greases or other inhibiting factors. Wastewater with high levels of COD (Chemical Oxygen Demand), TSS and FOG can be found in many parts of the food and beverage industry, such as ice cream, chocolate, candy, vegetable, dairy and cheese factories. Also Palm Oil Mill Effluent (POME) falls into this category.

Traditionally, the treatment process for such factories consists of a pre-treatment step, typically a physical-chemical treatment, to remove the free fats and solids, sometimes followed by high-rate anaerobic treatment, then generally followed by an aerobic biological treatment plant to achieve the discharge requirements. The pre-treatment step is essential for producing a wastewater which is suitable for the aerobic micro-organisms. Known issues with not properly pre-treated wastewaters are: foaming, sludge bulking, grease layers on aeration tanks, and poor settling characteristics. The result of a process with chemical pre-treatment is a good quality wastewater, but it also produces a chemically treated sludge from the pre-treatment and excess aerobic biological sludge.

In the past decades the sludge from pre-treatment systems has become an everincreasing problem to dispose of at ever increasing disposal costs. Decades ago these organic sludges could still be spread over land or mixed with other products to produce fodder as food for animals (pigs). More recently, in various countries, many of these sludges have to be incinerated. Lately, there is a trend to use these sludges as cosubstrate in anaerobic digestion plants, yet still at a cost to the factory producing it. Besides these sludges from the wastewater treatment processes, food factories are also producing organic wastes, which can either be rejected batches, returned products, concentrates produced during CIP cleaning, spills, et cetera.

To deal with the sludges of pre-treatment systems (physical-chemical) anaerobic digestion systems are often installed. In these cases chemicals and equipment are needed to produce these sludges. An alternative is to mix the wastewater and organic waste together and treat it in an anaerobic digester, such as disclosed in US patent publication US 5,015,384. Since the wastewater is relatively diluted and the anaerobic digestion requires a solids retention time (SRT) of at least 15-20 days, such a digestion plant would require a retention time equal to the SRT. However, a reactor with a retention time of over 10 days is generally not economical.

From WO 2013/155631 an anaerobic digester is known for treatment of industrial wastewater in which the influent stream may be a single stream or a composite stream of two or more waste streams. A solid-liquid separation device which may be a sludge screw thickener, treats a stream from the digester in a recirculation loop. The solids portion is returned to the digester to increase the solids retention time and the TSS in the digester. This allows the SRT to be controlled separately from the hydraulic retention time HRT. A liquid portion with less than 5% solids in the stream is removed and treated further in a polishing unit.

It is an object of the present invention to provide effective separation of organically loaded waste streams using an anaerobic reactor. It is another object of the invention to provide an anaerobic waste water treatment method using reduced amounts of coagulant and/or flocculant polymer. It is a further object of the invention to provide an anaerobic waste water treatment method in which the coagulant and/or flocculant polymer may be cost effective and is able to use metal complexes containing for instance Al or Fe.

Another object is to provide a relatively low cost separator downstream from the anaerobic reactor.

A further object is to provide downstream from the anaerobic reactor a separator that can be operated with a gas that is derived from the ambient.

### Summary of the invention

According to the present invention, a method of anaerobic treatment of an organic waste stream is provided in accordance with claim 1.

By using a first separating unit, the output stream of the anaerobic reactor can be concentrated and the solids can for the largest part be fed back into the reactor. The liquid fraction from the first separating unit contains reduced amounts of TSS and can be effectively treated in a dissolved gas flotation (DGF) unit of relatively small size (decrease in size between 50-80%). The sludge fraction at the output of the DGF unit is fed back into the anaerobic reactor, whereas the effluent from the DGF is of relatively high quality.

The method according to the invention provides a very good solution to treat both an organic waste wastewater and organic waste solids in a single process, with a high efficiency and allowing for a rather compact system design. By returning the biomass to the reactor, the Solids Retention Time (SRT) can be extended largely over the Hydraulic Retention Time (HRT). Typically the solids-liquid separation is a Dissolved Biogas Flotation (DBF) system. The pre-separator upstream of the DBF/DGF is a vacuum filter press or a cloth filter,a dynamic filter based on centrifugal forces, like a cyclone or a centrifuge or a DGF without or relative little the addition of flocculants and/or coagulants. The method according to the invention is beneficial for those fluids for which the SRT needs to be substantially higher than the HRT to obtain a stable and good process.

With the above method one or more waste streams can be dealt with in one system and a high level of conversion to biogas can be achieved. To comply with local discharge regulations a post-aerobic biological treatment may be required. The excess sludge from this aerobic system can be returned to the anaerobic reactor, which is another advantage over high rate (UASB-type) reactors. The method according to the invention provides approximately 20% lower operational costs compared to a method wherein a chemical treatment step is followed by a step involving a UASB-type reactor.

In an embodiment of the method according to the invention, at an outlet of the first separating unit a flocculant and/or coagulant is added to the second fraction in a dosage of between 1-12 g flocculant/kg dry solids , preferably between 3-9 g flocculant/kg dry solids, more preferably between 3-6 kg flocculant/g dry solids. The relatively low amounts of flocculant polymer allow effective operation of the Dissolved Gas Flotation unit.

The flocculant and/or coagulant may comprise relatively cheap compounds such as metal complexes, for instance Al or Fe in a dosage of between 50-1000 ppm, preferably between 100-400, so that it is more cost-effective.

The DGF unit may be operated using biogas from the anaerobic reactor to minimise the oxygen level is in the feedback stream to the anaerobic reactor. Instead of biogas air can be used after removing the majority of the oxygen.

However, by using the method according to the invention it was found that also a Dissolved Air Flotation (DAF) unit may be used as a separator. In the process of feeding the sludge from the DAF back into the anaerobic reactor, the oxygen in the sludge stream was found not inhibiting for the anaerobic processes in this reactor.

### Brief description of drawings

The present invention will be discussed in more detail hereinafter based on an exemplary embodiment with reference to the sole drawing.

### Detailed description of exemplary embodiments

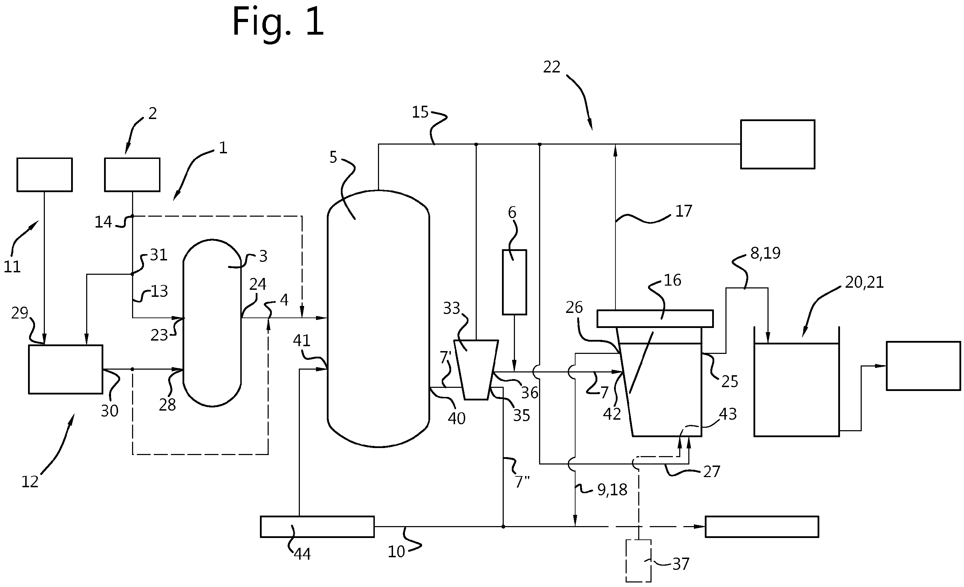

Figure 1 shows a system 22 for anaerobic treatment of an organic wastewater and organic waste streams 1. The system 22 comprises an equalization buffer 3, for instance in the form of a pump sump or a mixing tank, provided with a primary inlet 23 arranged to receive a primary stream 2 of organic wastewater. The organic wastewater 1 may for instance comprise wastewater from a dairy, chocolate or cheese factory, comprising slurries, liquids (such as in the case of chocolate factories). An anaerobic reactor 5 is connected to an outlet 24 of the equalization buffer 3. An outlet 40 of the reactor 5 is connected to a pre-separating unit 33. A first outlet 35 of the pre-separating unit 33 is connected to a feedback inlet 41 of the reactor 5 for feeding back a stream 7" containing between 50 % and 80 % of the solids by weight into the reactor 5.

A second outlet 36 of the pre-separating unit 33 is connected to an input 42 of a separator 16 for supplying a low solids stream 7 into the separator 16. In the separator 16, which may be DGF unitor a DAF unit as described in EP 1 735 070 in the name of the applicant, the reactor mixture 7 is separated into a liquid fraction 8 and a sludge fraction 9. The sludge fraction 9 is fed back to the feedback inlet 41 of the reactor 5.

The anaerobic reactor 5 may be cylindrical with a double membrane roof. If desired, multiple subsequent anaerobic reactors 5 may be used, wherein the first reactor is a relatively large reactor and the second reactor is fitted with a membrane roof for gas storage (not shown). Preferably, mixing devices (not shown) are installed in the reactor 5 to enhance mixing and avoid stratification. The temperature in the reactor 5 may be controlled by steel tubing in the wall of the reactor 5, which act as a heat exchanger. The hydraulic retention time may vary between 1-14 days. The organic loading will typically depend on substrates and solids and will typically be between 2-20, preferably 3-7 kg COD/m³/day. Recycling of solids is required to achieve the desired organic loading and to attain a sufficiently long solids retention time (SRT). Alternatively, the equalization buffer 3 can be left out, such that the primary 2 and secondary 11 streams flow directly to the reactor 5 (as indicated by the dashed lines).

A flocculant and/or coagulant feeder 6 is provided and is connected to the inlet 42 of the separator 16, wherein the feeder is arranged for dosing the flocculant and/or coagulant at 1-12, preferably 3-9, more preferably 3-6, g flocculant/kg dry solids. The separator 16 of figure 1 can be a dissolved biogas flotation (DBF) separator 16, comprising a liquid fraction outlet 25, a sludge fraction outlet 26 connected to the feedback inlet 41 of the anaerobic reactor 5, and a secondary inlet 27 that is arranged to receive biogas from the anaerobic reactor 5.

Instead of the biogas introduced into the reactor 16 via the secondary inlet 27, treated air containing less oxygen or untreated air may be introduced into secondary inlet 43, so that the reactor is a Dissolved Air Flotation unit. The air may be supplied by a compressor 37 that draws in air from the ambient. The air supply has been indicated in a dashed line and may be used in combination with or instead of supplying biogas via the inlet 27.

A further separator unit 44 is comprised upstream of the inlet 41 of the anaerobic reactor to further remove liquid from the stream returned to the anaerobic reactor to 4-30% TSS

According to the invention, the equalization buffer 3 further comprises a secondary inlet 28 arranged to receive a secondary stream 11 comprising organic waste solids. The separator 16 may be gastight to prevent biogas from escaping and/or exposing the anaerobic bacteria to outside air, which, depending on the type of bacteria, could kill them. It was found however, that the use of the pre-separating unit 33 allows supply of air into the separator 16 without adversely affecting the anaerobic reactions in the reactor 5.

The system 22 may further comprise a pre-treatment unit 12 comprising a main inlet 29 and an outlet 30 connected to the secondary inlet 28 of the equalization buffer 3. The pre-treatment unit 12 can be a de-packing unit, cutting unit, shredding unit, pasteurisation unit, sterilisation unit, oxidation unit, solubilisation unit, hydrolysis unit or any combination thereof. The type of pre-treatment depends on the type of product, country (regulations) and process requirements. A screen may be used to remove larger debris, like cloth, wood or paper. Furthermore, a pre-separator (indicated by the frustoconical shape, with reference numeral 33) may be installed before the DGF 16, to be able to dose a flocculant to reduce tank volume even further. Such a pre-separator 33 is a vacuum filter press or a cloth filter, a dynamic filter based on centrifugal forces, like a cyclone or a centrifuge or a DGF, without or with little addition of chemicals.

In an exemplary configuration (not shown), used by the applicant in a secure testing environment, the system 22 is used with two anaerobic reactors 5, with a volume of 600-900, such as 750 m3, each. A pipe reactor with flocculant dosing is used. This system can for instance be used with a chocolate factory. A typical wastewater volume then is 100 m³/d with a COD concentration varying between 10-60 g/l at an average of 37 g/l. Based on an effective liquid volume of 1300 m³ the organic loading then is 2,5-3,0 kg COD/m³/d on average. The separator/flotation device 16 is operated at 5 m³/h. Applicant has been able to achieve consistently stable results with the above parameters and flocculant dose used. TSS and COD removal percentages of more than 95% were achieved for the wastewater from the DBF 16.

According to the invention, the method of anaerobic treatment of an organic wastewater and organic waste streams 1, comprises the steps of
a) feeding a primary stream 2 of organic wastewater 1 to an anaerobic reactor 5;
b) feeding a secondary stream 11 comprising organic waste solids to the anaerobic reactor 5;
d) separating a reactor mixture 7 originating from the anaerobic reactor 5 into a liquid fraction 8 and a sludge fraction 9; and
e) feeding, at least in part, the sludge fraction 9 back to the anaerobic reactor 5.

Preferably, the method is carried out in mesophilic conditions (25-42° C), although thermophilic conditions (43-60° C) can also be used.

The method step of (a) feeding the primary stream 2 of organic wastewater and organic waste streams 1 further may comprise the step of feeding the secondary stream 11 of the organic waste solids to the equalization buffer 3. Feeding the secondary stream 11 of organic waste solids may comprise proportionally feeding the second stream 11 to the equalization buffer 3 to obtain a more consistent mixture. As stated before, feeding the secondary stream of organic waste solids may comprise a pre-treatment 12 thereof comprising de-packing, cutting, shredding, pasteurisation, sterilisation, solubilisation or hydrolysis, or any combination thereof.

Furthermore, the method step of (a) feeding the primary stream 2 of organic wastewater further may comprise separating the primary stream 2 of organic wastewater into a first fraction 13 and a second fraction 14, and feeding the first fraction 13 to the equalization buffer 3 and the second fraction 14 to the pre-treatment 12. The method step of feeding the buffer mixture 4 further comprises preheating the buffer mixture 4 from the equalization buffer 3 by a heating unit (not shown). The heating unit can also be used to heat raw waste water entering the equalization buffer 3. Preferably, a heat recovery system is used, wherein heat from wastewater is used to heat further wastewater, for instance via a heat exchanger.

The method step of separating the reactor mixture 7 may comprise feeding biogas 15 from the anaerobic reactor to a dissolved biogas flotation separator (DGF) 16. Therein, 5-30, preferably 5-20, more preferably around 10-15 1 biogas/kg solids, is fed to the dissolved biogas flotation separator (DBF) 16. The method further may comprise the step of collecting biogas 17 from the dissolved biogas flotation separator (DBF) 16 for further use, such as for heating or generation of energy.

The method step of feeding, at least in part, the sludge fraction 9 back to the anaerobic reactor 5 further comprises collecting, at least in part, the sludge fraction 18 for further use.

Advantageously, wastewater 19 from the separator 16 is subsequently subjected to a polishing step 20. The polishing step 20 preferably comprises aerobic treatment 21. Excess sludge originating from the polishing step 20 can be fed back to the anaerobic reactor 5.

## Claims

1. Method of anaerobic treatment of an organic waste stream (1) comprising the steps of:
- feeding the organic waste stream to an anaerobic reactor (5),
- separating a reactor mixture (7') originating from the anaerobic reactor (5) in a first separating unit (33), having a first outlet (35) and a second outlet (36), the first separating unit separating the mixture (7') into a first fraction (7") containing between 50 % and 80 % of the solids by weight and a second fraction (7), the first fraction (7") exiting the first separating unit through the first outlet (35), and the second fraction (7) exiting the first separating unit through the second outlet (36), wherein the first separating unit (33) is a pre-separating unit that is a dynamic filter based on centrifugal forces or a dissolved gas flotation unit, without the addition of flocculants and/or coagulants,
- feeding the second fraction (7) from the first separating unit into a Dissolved Gas Flotation (DGF) unit (16), wherein at the second outlet (36) of the first separating unit (33) a flocculant and/or coagulant (6) is added to the second fraction (7) in a dosage of between 1-12 g flocculant/kg dry solids,
- separating in the DGF unit (16) the second fraction (7) into a sludge fraction (9) and a liquid fraction (8),
- feeding the first fraction (7") originating from the first separating unit (33) and the sludge fraction (9) originating from the DGF unit (16), via a further separator unit (44), back into the anaerobic reactor (5), wherein the further separator unit removes liquid from the stream that is returned to the anaerobic reactor (5) to 4-30 % total suspended solids.

2. Method according to claim 1, wherein at the second outlet (36) of the first separating unit (33) the flocculant and/or coagulant (6) is added to the second fraction (7) in a dosage of between 3-6 g flocculant/kg dry solids.

3. Method according to claim 2, wherein the flocculant and/or coagulant (6) comprises a metal complex, preferably a Fe or Al complex.

4. Method according to claim 1, 2 or 3, wherein air is introduced into the DGF unit (16).

5. Method according to claim 1, 2 or 3, wherein biogas from the anaerobic reactor (5) is introduced into the DGF unit (16).

6. Method according to claim 1, wherein the DGF unit wastewater from the DGF unit (16) is subjected to a polishing step (20) directly downstream from the DGF unit (16) .

7. System for anaerobic treatment of an organic waste stream (1) comprising:
- an anaerobic reactor (5),
- a first separating unit (33) connected to an outlet (40) of the reactor (5) for separating a reactor mixture (7') at the outlet of the anaerobic reactor (5) into a first fraction (7") at a first outlet (35), containing between 50 % and 80 % of the solids by weight and a second fraction (7) at a second outlet (36), the first outlet (35) being connected to an inlet (41) of the reactor (5), wherein the first separating unit (33) is a pre-separating unit that is a dynamic filter based on centrifugal forces or a dissolved gas flotation unit, without the addition of flocculants and/or coagulants,
- a dissolved gas flotation unit (DGF) (16) connected with an input (42) to the second outlet (36) of the first separating unit (33), for receiving the second fraction (7), wherein a sludge outlet (26) of the dissolved gas flotation unit (16) and the first outlet (35) of the first separating unit (33) are connected to the inlet (41) of the reactor (5) via a further separator unit (44) arranged upstream from the reactor (5), wherein the further separator unit (44) is adapted for removing liquid from the stream that is returned to the anaerobic reactor (5) to 4-30 % total suspended solids,
- a gas injection device (27,37) connected to the dissolved gas flotation unit (16) for injection of a dissolved gas into the gas flotation unit (16), and
- a dosing unit (6) connected at the second outlet (36) to the gas flotation unit (16) for dosing a flocculant and/or coagulant to the gas flotation unit (16).

8. System according to claim 7, wherein the dosing unit (6) is adapted to dose between 1-12 g, preferably between 3-9 g, more preferably between 3-6 g flocculant/kg dry solids to the gas flotation unit (16).

9. System according to claim 7 or 8, wherein an air supply (37) is connected to a gas inlet (43) of the DGF unit (16).

10. System according to claim 7, the DGF unit (16) comprises a secondary inlet (27) arranged for receiving biogas from the anaerobic reactor (5).

## Patentansprüche

1. Verfahren zur anaeroben Behandlung eines organischen Abfallstroms (1), umfassend die Schritte:
- Zuführen des organischen Abfallstroms zu einem anaeroben Reaktor (5),
- Trennen eines Reaktorgemischs (7′), das aus dem anaeroben Reaktor (5) stammt, in einer ersten Trenneinheit (33), die einen ersten Auslass (35) und einen zweiten Auslass (36) aufweist, wobei die erste Trenneinheit das Gemisch (7′) in eine erste Fraktion (7ʺ), die zwischen 50 Gew.-% und 80 Gew.-% der Feststoffe enthält, und eine zweite Fraktion (7) trennt, wobei die erste Fraktion (7ʺ) die erste Trenneinheit durch den ersten Auslass (35) verlässt und die zweite Fraktion (7) die erste Trenneinheit durch den zweiten Auslass (36) verlässt, wobei die erste Trenneinheit (33) eine Vortrenneinheit ist, die ein dynamischer Filter auf der Basis von Zentrifugalkräften oder eine Flotationsseinheit für gelöstes Gas ohne die Zugabe von Flockungsmitteln und/oder Koagulationsmitteln ist,
- Zuführen der zweiten Fraktion (7) von der ersten Trenneinheit in eine Flotationsseinheit (16) für gelöstes Gas (Dissolved Gas Flotation, DGF), wobei am zweiten Auslass (36) der ersten Trenneinheit (33) ein Flockungsmittel und/oder Koagulationsmittel (6) zu der zweiten Fraktion (7) in einer Dosierung von zwischen 1-12 g Flockungsmittel/kg trockene Feststoffe zugegeben wird,
- Trennen der zweiten Fraktion (7) in der DGF-Einheit (16) in eine Schlammfraktion (9) und eine flüssige Fraktion (8),
- Zuführen der ersten Fraktion (7ʺ), die aus der ersten Trenneinheit (33) stammt, und der Schlammfraktion (9), die aus der DGF-Einheit (16) stammt, über eine weitere Trenneinheit (44) zurück in den anaeroben Reaktor (5), wobei die weitere Trenneinheit Flüssigkeit aus dem Strom, der zum anaeroben Reaktor (5) zurückgeführt wird, zu 4-30% gesamte suspendierte Feststoffe entfernt.

2. Verfahren nach Anspruch 1, bei dem am zweiten Auslass (36) der ersten Trenneinheit (33) das Flockungsmittel und/oder Koagulationsmittel (6) zu der zweiten Fraktion (7) in einer Dosierung im Bereich von 3-6 g Flockungsmittel/kg trockene Feststoffe zugegeben wird.

3. Verfahren nach Anspruch 2, bei dem das Flockungsmittel und/oder Koagulationsmittel (6) einen Metallkomplex, vorzugsweise einen Fe- oder Al-Komplex, umfasst.

4. Verfahren nach Anspruch 1, 2 oder 3, bei dem Luft in die DGF-Einheit (16) eingeleitet wird.

5. Verfahren nach Anspruch 1, 2 oder 3, bei dem Biogas aus dem anaeroben Reaktor (5) in die DGF-Einheit (16) eingeleitet wird.

6. Verfahren nach Anspruch 1, bei dem das DGF-Einheit-Abwasser aus der DGF-Einheit (16) einem Verfeinerungsschritt (20) direkt stromabwärts der DGF-Einheit (16) unterzogen wird.

7. System zur anaeroben Behandlung eines organischen Abfallstroms (1), umfassend:
- einen anaeroben Reaktor (5),
- eine erste Trenneinheit (33), die mit einem Auslass (40) des Reaktors (5) verbunden ist, zum Trennen eines Reaktorgemischs (7′) am Auslass des anaeroben Reaktors (5) in eine erste Fraktion (7ʺ) an einem ersten Auslass (35), die zwischen 50 Gew.-% und 80 Gew.-% der Feststoffe enthält, und eine zweite Fraktion (7) an einem zweiten Auslass (36), wobei der erste Auslass (35) mit einem Einlass (41) des Reaktors (5) verbunden ist, und wobei die erste Trenneinheit (33) eine Vortrenneinheit ist, die ein dynamischer Filter auf der Basis von Zentrifugalkräften oder eine Flotationsseinheit für gelöstes Gas ohne die Zugabe von Flockungsmitteln und/oder Koagulationsmitteln ist,
- eine Flotationsseinheit für gelöstest Gas (DGF) (16), die mit einem Eingang (42) zum zweiten Auslass (36) der ersten Trenneinheit (33) verbunden ist, zum Aufnehmen der zweiten Fraktion (7), wobei ein Schlammauslass (26) der Flotationsseinheit für gelöstest Gas (16) und der erste Auslass (35) der ersten Trenneinheit (33) mit dem Einlass (41) des Reaktors (5) über eine weitere Trenneinheit (44) verbunden sind, die stromaufwärts vom Reaktor (5) angeordnet ist, wobei die weitere Trenneinheit (44) zum Entfernen von Flüssigkeit aus dem Strom, der zum anaeroben Reaktor (5) zurückgeführt wird, zu 4-30% gesamte suspendierte Feststoffe angepasst ist,
- eine Gasinjektionsvorrichtung (27, 37), die mit der Flotationsseinheit für gelöstes Gas (16) verbunden ist, zum Injizieren eines gelösten Gases in die Flotationsseinheit für gelöstes Gas (16), und
- eine Dosiereinheit (6), die am zweiten Auslass (36) mit der Flotationsseinheit für gelöstes Gas (16) verbunden ist, zum Dosieren eines Flockungsmittels und/oder Koagulationsmittels zu der Flotationsseinheit für gelöstes Gas (16).

8. System nach Anspruch 7, bei dem die Dosiereinheit (6) angepasst ist, um zwischen 1-12 g, vorzugsweise zwischen 3-9 g, bevorzugter zwischen 3-6 g Flockungsmittel/kg trockene Feststoffe zu der Flotationsseinheit für gelöstes Gas (16) zu dosieren.

9. System nach Anspruch 7 oder 8, bei dem eine Luftzufuhr (37) mit einem Gaseinlass (43) der DGF-Einheit (16) verbunden ist.

10. System nach Anspruch 7, bei dem die DGF-Einheit (16) einen sekundären Einlass (27) umfasst, der zum Aufnehmen von Biogas aus dem anaeroben Reaktor (5) angeordnet ist.

## Revendications

1. Procédé de traitement anaérobie d'un flux de déchets organiques (1) comprenant les étapes consistant à :
- alimenter le flux de déchets organiques vers un réacteur anaérobie (5),
- séparer un mélange de réacteur (7') provenant du réacteur anaérobie (5) dans une première unité de séparation (33), ayant une première sortie (35) et une seconde sortie (36), la première unité de séparation séparant le mélange (7') en une première fraction (7") contenant entre 50 % et 80 % de solides en poids et une seconde fraction (7), la première fraction (7") sortant de la première unité de séparation par la première sortie (35), et la seconde fraction (7) sortant de la première unité de séparation par la seconde sortie (36), dans lequel la première unité de séparation (33) est une unité de pré-séparation qui est un filtre dynamique basé sur des forces centrifuges ou une unité de flottation au gaz dissous, sans ajout de floculants et/ou coagulants,
- alimenter la seconde fraction (7) à partir de la première unité de séparation jusque dans une unité de flottation au gaz dissous (DGF) (16), dans lequel au niveau de la seconde sortie (36) de la première unité de séparation (33), un floculant et/ou un coagulant (6) est ajouté à la seconde fraction (7) en une dose de 1 à 12 g de floculant/kg de solides secs,
- séparer dans l'unité DGF (16) la seconde fraction (7) en une fraction de boue (9) et une fraction liquide (8),
- alimenter la première fraction (7") provenant de la première unité de séparation (33) et la fraction de boue (9) provenant de l'unité DGF (16), via une unité de séparation supplémentaire (44), en retour dans le réacteur anaérobie (5), dans lequel l'unité de séparation supplémentaire élimine du liquide du flux qui est renvoyé vers le réacteur anaérobie (5), jusqu'à 4 à 30 % de solides en suspension totaux.

2. Procédé selon la revendication 1, dans lequel, au niveau de la seconde sortie (36) de la première unité de séparation (33), le floculant et/ou le coagulant (6) est ajouté à la seconde fraction (7) en une dose comprise entre 3 et 6 g de floculant/kg de solides secs.

3. Procédé selon la revendication 2, dans lequel le floculant et/ou coagulant (6) comprend un complexe métallique, de préférence un complexe de Fe ou Al.

4. Procédé selon la revendication 1, 2 ou 3, dans lequel de l'air est introduit dans l'unité DGF (16).

5. Procédé selon la revendication 1, 2 ou 3, dans lequel le biogaz provenant du réacteur anaérobie (5) est introduit dans l'unité DGF (16).

6. Procédé selon la revendication 1, dans lequel les eaux usées d'unité DGF provenant de l'unité DGF (16) sont soumises à une étape de polissage (20) directement en aval de l'unité DGF (16).

7. Système de traitement anaérobie d'un flux de déchets organiques (1) comprenant :
- un réacteur anaérobie (5),
- une première unité de séparation (33) reliée à une sortie (40) du réacteur (5) pour séparer un mélange de réacteur (7') au niveau de la sortie du réacteur anaérobie (5) en une première fraction (7") au niveau d'une première sortie (35), contenant entre 50 % et 80 % des solides en poids et une seconde fraction (7) au niveau d'une seconde sortie (36), la première sortie (35) étant reliée à une entrée (41) du réacteur (5), dans lequel la première unité de séparation (33) est une unité de pré-séparation qui est un filtre dynamique basé sur des forces centrifuges ou une unité de flottation au gaz dissous, sans ajout de floculant et/ou de coagulant,
- une unité de flottation au gaz dissous (DGF) (16) reliée avec une entrée (42) à la seconde sortie (36) de la première unité de séparation (33), pour recevoir la seconde fraction (7), dans lequel une sortie de boue (26) de l'unité de flottation au gaz dissous (16) et la première sortie (35) de la première unité de séparation (33) sont reliées à l'entrée (41) du réacteur (5) via une unité de séparation supplémentaire (44) agencée en amont du réacteur (5), dans lequel l'unité de séparation supplémentaire (44) est adaptée pour éliminer du liquide à partir du flux qui est renvoyé au réacteur anaérobie (5), jusqu'à 4 à 30 % de solides en suspension totaux,
- un dispositif d'injection de gaz (27, 37) relié à l'unité de flottation au gaz dissous (16) pour l'injection d'un gaz dissous dans l'unité de flottation au gaz (16), et
- une unité de dosage (6) reliée au niveau de la seconde sortie (36) à l'unité de flottation de gaz (16) pour doser un floculant et/ou un coagulant à l'unité de flottation de gaz (16).

8. Système selon la revendication 7, dans lequel l'unité de dosage (6) est adaptée pour doser entre 1 et 12 g, de préférence entre 3 et 9 g, plus préférablement entre 3 et 6 g de floculant/kg de solides secs dans l'unité de flottation au gaz (16).

9. Système selon la revendication 7 ou 8, dans lequel une alimentation en air (37) est reliée à une entrée de gaz (43) de l'unité DGF (16).

10. Système selon la revendication 7, dans lequel l'unité DGF (16) comprend une entrée secondaire (27) agencée pour recevoir du biogaz provenant du réacteur anaérobie (5).
